Europäisches Patentamt

European Patent Office

Office européen des brevets

(11) Veröffentlichungsnummer: **0 186 127 B1**

(12) **EUROPÄISCHE PATENTSCHRIFT**

(45) Veröffentlichungstag der Patentschrift: **27.02.91**

(51) Int. Cl.⁵: **G06K 13/02**, G06K 17/00

(21) Anmeldenummer: **85116186.9**

(22) Anmeldetag: **18.12.85**

(54) **Belegcodiereinrichtung mit Beleglesestation und Belegsichtstation.**

(30) Priorität: **24.12.84 DE 3447429**

(43) Veröffentlichungstag der Anmeldung:
**02.07.86 Patentblatt 86/27**

(45) Bekanntmachung des Hinweises auf die
Patenterteilung:
**27.02.91 Patentblatt 91/09**

(84) Benannte Vertragsstaaten:
**AT CH DE FR GB IT LI**

(56) Entgegenhaltungen:
**DE-A- 3 014 491**

(73) Patentinhaber: **Mannesmann Kienzle GmbH
Postfach 1640 Heinrich-Hertz-Strasse
D-7730 Villingen-Schwenningen(DE)**

(72) Erfinder: **Görner, Horst
Neue Heimat Strasse 50
D-7742 St. Georgen(DE)**
Erfinder: **Dyma, Horst
Langes Gewann 26
D-7730 Villingen-Schwenningen(DE)**

Rank Xerox (UK) Business Services

# Beschreibung

Die Erfindung bezieht sich auf eine Codiereinrichtung mit einer Lesevorrichtung für das maschinelle Lesen vorcodierter Markierungen, mit einer Sichtstation zum Anhalten des Beleges zum visuellen Lesen handschriftlicher Markierungen und einer oder mehreren anschließenden Druckstationen zum codierenden Bedrucken der Belege, wobei die Belege zwischen der Lese-, Sicht- und den Druckstationen durch erste Transportmittel bewegt werden.

Bei Belegcodiereinrichtungen wird häufig der Wunsch geäußert, daß zusätzlich zu der Möglichkeit der Handeingabe von zu Codierenden Daten auch eine Leseeinrichtung vorhanden sein soll, die auf dem Beleg bereits vorcodierte Daten abliest. Dabei läuft der Beleg im allgemeinen vor der stillstehenden Leseeinrichtung vorbei. Wird die Lesestation in Transportrichtung des Beleges vor der Sichtstation angeordnet (DE-A-3014491), so wird der Beleg in der Sichtstation angehalten, um der Bedienungsperson die Möglichkeit zu geben, die zu codierenden Werte vom Beleg abzulesen und manuell einzutasten. Eine derartige Anordnung der Beleglesestation in Belegtransportrichtung vor der Sichtstation hat zur Folge, daß immer dann, wenn ein Beleg wegen einer nicht erkannten mangelhaften Codierung mehrfach gelesen werden muß, eine Unterbrechung in der Bedienung des Beleglaufes stattfindet, weil der Beleg dann mehrfach, beispielsweise im Kreise, an der Lesestation vorbeigeführt werden muß oder sofort in ein Fach für "Zurückweisungen" abgelegt wird.

Ein weiterer Nachteil einer derartigen Anordnung der Lesestation vor der Sichtstation ist der, daß zwangläufig ein größerer Platzbedarf für den gesamten Belegcodierer vorhanden ist, so daß man Probleme hat, die Codiereinrichtung als ein Auf-Tisch-Gerät auszubilden. In aller Regel werden Belegcodierer, in denen Lesestation und Sichtstation kombiniert angeordnet sind, als Standmodelle ausgebildet, weil der Platzbedarf für ein Auf-Tisch-Gerät zu groß ist.

Aufgabe der Erfindung ist es demgegenüber, ein Überlappendes Bearbeiten der Belege in der Lesestation und in der Sichtstation so zu ermöglichen, daß der Beleg in der Lesestation möglichst auch zwei- und dreimal gelesen werden kann, während der vorhergehende oder nachfolgende Beleg in der Sichtstation für die visuelle Ablesung angehalten werden kann. Auf diese Art und Weise entstehen im Belegfluß die geringsten Unterbrechungen und Verzögerungen. Weiter hat sich die Erfindung die Aufgabe gestellt, die beiden Stationen so anzuordnen, daß ein einfacher manueller Zugriff auf die Belegsichtstation möglich ist.

Zur Lösung der gestellten Aufgabe ist die Erfindung dadurch gekennzeichnet, daß durch zweite Transportmittel ein Versatz der Belege quer zur Transportrichtung derart erfolgt, daß die Sichtstation in Blickrichtung der Bedienungsperson vor der Lesestation angeordnet ist.

Zur Erzielung einer möglichst kompakten Bauform ist eine Ausgestaltung der Erfindung dadurch gekennzeichnet, daß die Beleglesestation nicht nur hinter der Belegsichtstation sondern auch versetzt unterhalb derselben angeordnet ist, derart daß beim Versatz des Beleges durch die zweiten Transportmittel nicht nur eine Verschiebung nach vorn, sondern auch ein Anheben des Beleges auf eine zweite Ebene erfolgt, in der die Sichtstation und die Druckstation angeordnet sind.

Eine derartige Anordnung erlaubt es dann auch, den Belegvor ratsbehälter, die Transportmittel für den Transport des Beleges zur Lesestation und die Lesestation selbst als ein Modul in Form eines Vor- oder Unterbaues für den eigentlichen Codierdrucker auszubilden.

Gemäß einer Ausgestaltung der Erfindung ist die Belegsichtstation nach oben offen. Dies ermöglicht es, Belege, die zurückgewiesen wurden, zu entnehmen und einen Ersatzbeleg auszustellen, der in der Belegreihenfolge den gleichen Platz einnimmt wie; der zurückgewiesene Beleg.

Gemäß einer weiteren Ausgestaltung der Erfindung umfassen die zweiten Transportmittel für das Bewegen der Belege aus der Lesestation in die Sichtstation mit sägezahnförmigen Vorsprüngen versehene Reibrollen, die zum Belegwechsel mit Andrückmitteln in Eingriff gebracht und angetrieben werden. Die sägezahnförmigen Vorsprünge der Reibrollen dienen dabei dem Beleg als Anschlag zum Anheben desselben.

Die Andrückmittel umfassen Klinken, die, wenn der Beleg angehoben worden ist, in einen Ausschnitt zwischen je zwei Reibrollen eintreten und die den Beleg in die sägezahnförmigen Vorsprünge drücken und damit ein Zurückfallen des Beleges in die Lesestation verhindern.

Um ein Überschleudern des Beleges zu verhindern, ist ein den Weg des Beleges nach oben begrenzender, höhenverstellbarer Anschlag vorgesehen, der gleichzeitig dafür sorgt, daß der Beleg durch die Reibrollen in die Belegsichtstation bewegt wird.

Ein Ausführungsbeispiel der Erfindung wird anhand der beiliegenden Zeichnungen beschrieben.

In diesen Zeichnungen ist

FIG. 1A und 1B eine Draufsicht auf die erfindungsgemäße Belegcodiereinrichtung, soweit sie von der Erfindung betroffen ist,

FIG. 2 zeigt einen seitlichen Schnitt durch die Anordnung in der Stellung, in der der Beleg seitlich und stehend, d. h. also in Zeilenrichtung, transportiert wird,

FIG. 3 zeigt den Beleg während seiner Bewegung aus der Lesestation in die Sichtstation,
FIG. 4 ist eine Darstellung des Getriebes für die Sondertransportmittel.

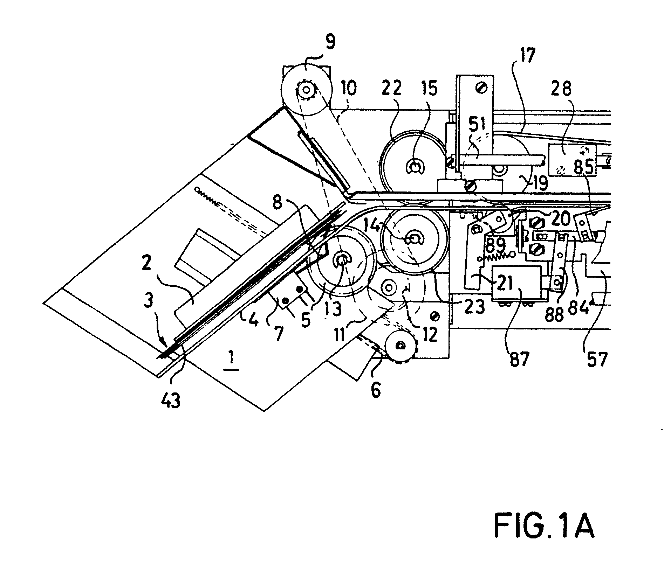

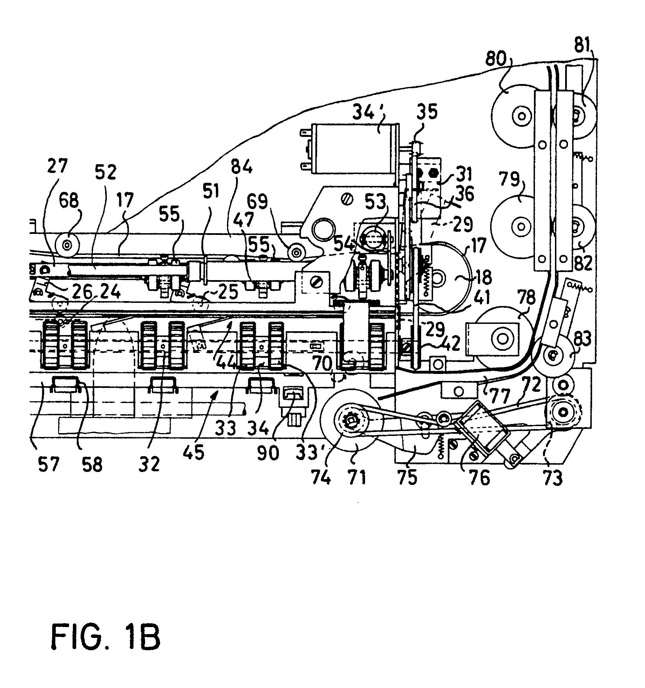

Die Einrichtung sei zunächst anhand der FIG. 1A und B in groben Zügen beschrieben. Auf der linken Seite ist die Belegvorratsstation 1 angeordnet. Durch einen beweglichen Anschlag 2 wird der Belegstapel 3 gegen eine Führungswand 4 bzw. gegen eine Belegabzugsrolle 5 für den Belegabzug gedrückt. Der bewegliche Anschlag 2 steht unter dem Einfluß einer langen Zugfeder 6, die es bewirkt, daß der Anschlag 2 den Belegstapel 3 immer mit etwa gleichbleibendem Anpreßdruck gegen die Abzugsrolle 5 drückt. Ein Mikroschalter 7 fühlt mit seinem Schaltarm 8 ab, ob noch Belege in der Belegvorratsstation 1 enthalten sind. Ein Motor 9 treibt über einen Riemen 10 und eine Riemenrolle 11 ein Zahnrad 12 an. Von dem Zahnrad 12 werden weitere Zahnräder angetrieben, die einerseits mit der Achse 13 der Belegabzugsrolle 5, andererseits mit der Achse 14 der ersten Belegtransportrolle 23 in Verbindung stehen. Das Getriebe vom Motor 9 umfaßt außer dem Zahnrad 12 und den beiden mit den Achsen 13 und 14 verbundenen Zahnrädern auch ein weiteres Zahnrad, welches mit der Achse 15 verbunden ist. Dabei ist die Einrichtung so getroffen, daß die beiden Achsen 14 und 15 gegenläufig angetrieben werden, wodurch versehentlich doppelt zugeführte Belege durch die gegenläufige Bewegung der Belegtransportrollen 22 und 23 zurückgehalten werden. Ein Sensor 89 prüft, ob noch ein Beleg transportiert wird und schaltet gegebenenfalls den Motor 9 ab, wenn eine Unterbrechung im Belegtransport erforderlich ist.

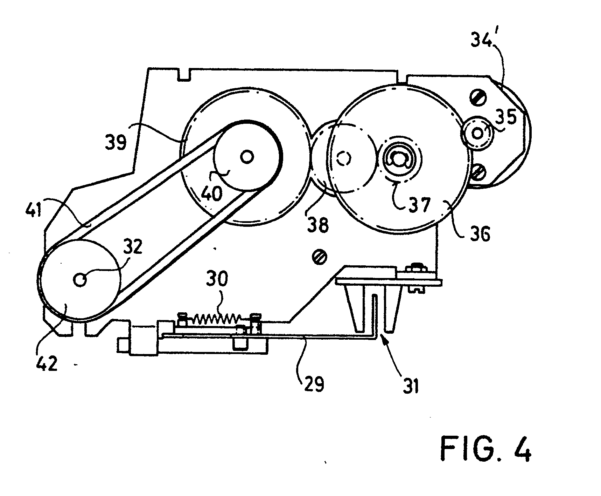

Dem Transport der Belege 43 des Stapels 3 in die Beleglesestation 44 dient ein Transportriemen 17, der über zwei Antriebsrollen 18 und 19 geführt ist. Rollen 68, 69 halten den Transportriemen 17 gespannt. Die Antriebsrollen 18 und 19 werden durch einen nicht gezeigten Elektromotor so angetrieben, daß der Riemen 17 in FIG. 1A und B in Richtung auf die Lesestation 44 von links nach rechts läuft. Eine Andrückrolle 20 auf einem Hebel 21 sorgt dafür, daß der von den Vereinzelungsrollen 22 und 23 zugeführte Beleg von dem Transportriemen 17 übernommen wird. Der Riemen 17 wirkt mit Andrückrollen 24 zusammen, die in einem Führungsblech gehalten sind. Die Kupplungsrollen 25, die je auf Hebeln 26 gelagert sind, bewirken ein Andrücken des Riemens 17 an die Andrückrollen 24, so daß der Beleg zwischen dem Riemen 17 und den Andrückrollen 24 festgeklemmt ist, sobald auch die Kupplungsrollen 25 in Arbeitslage sind. Die Hebel 26, die die Rollen 25 tragen, sind an einer Stange 27 schwenkbar gelagert. Die Stange 27 kann durch einen Elektromagneten 28 in FIG. 1A und B von rechts nach links verschwenkt werden, wodurch die Kupplungsrollen 25 im Gegenuhrzeigersinn verschwenkt werden, so daß der Beleg dann nicht mehr zwischen dem Riemen 17 und den Andrückrollen 24 festgeklemmt wird. Der Beleg wird dann durch den Riemen 17 und die Andrückrollen 24 transportiert bis an einen verschwenkbaren Anschlag 29 (siehe auch FIG. 4), der bei seiner Verschwenkung gegen die Kraft einer Feder 30 in eine Lichtschrankeneinrichtung 31 eintritt und damit dem Motor, der den Transportriemen 17 antreibt, meldet, daß der Beleg in seiner Lesestation 44 angelangt ist. Die Freigabe des Beleges für den Transport in die Sichtstation durch den Elektromagneten 28 erfolgt aber erst, wenn die Steuerung meldet, daß der Beleg richtig gelesen und die Sichtstation frei ist.

Vor dem Beleg 43 (siehe FIG. 1 bis 3) ist eine Achse 32 angeordnet, die mit sägezahnförmigen Vorsprüngen versehene Reibrollen 33 trägt. Es bilden jeweils zwei Reibrollen 33 und 33' ein Paar, welches beidseits eines Ausschnittes 34 angeordnet ist. Über ein entsprechendes Getriebe wird die Achse 32 Von einem Motor 34' (FIG.4) über ein Getriebe, bestehend aus den Zahnrädern 35, 36, 37, 38 und 39 sowie über einen Riementrieb 40, 41 und 42 (FIG.4) angetrieben, wenn der Motor 34' eingeschaltet wird, was durch die Steuerung erfolgt. Die Reibrollen 33 sind Teil der zweiten Transportmittel gemäß der Erfindung; mit deren Hilfe die Belege 43 aus der Beleglesestation 44 in die Belegsichtstation 45 transportiert werden.

Aus der FIG. 1A und 1B erkennt man noch Führungsklinken 85, die beim Transport des Beleges 43 diesen glätten, wenn er verknittert sein sollte, damit der Beleg sicher zwischen die Reibrollen 33 und Andrückmittel 46 der Lesestation 44 eingeführt wird Die Führungsklinken 85 sind schwenkbar mit einer Stange 86 verbunden, die durch einen Elektromagneten 87 über einen Schwenkhebel 88 in die wirksame Lage verschwenkt werden können.

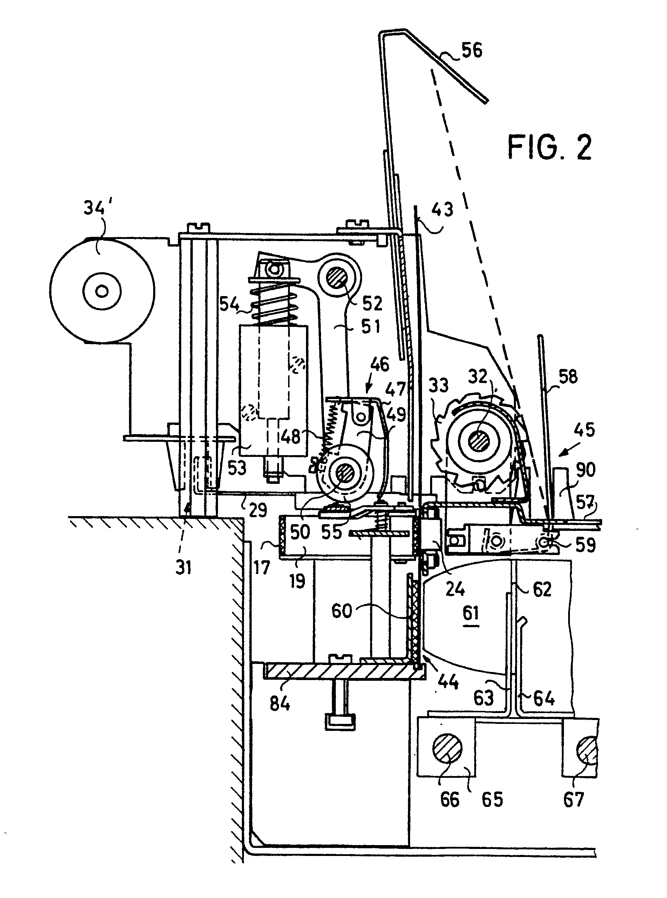

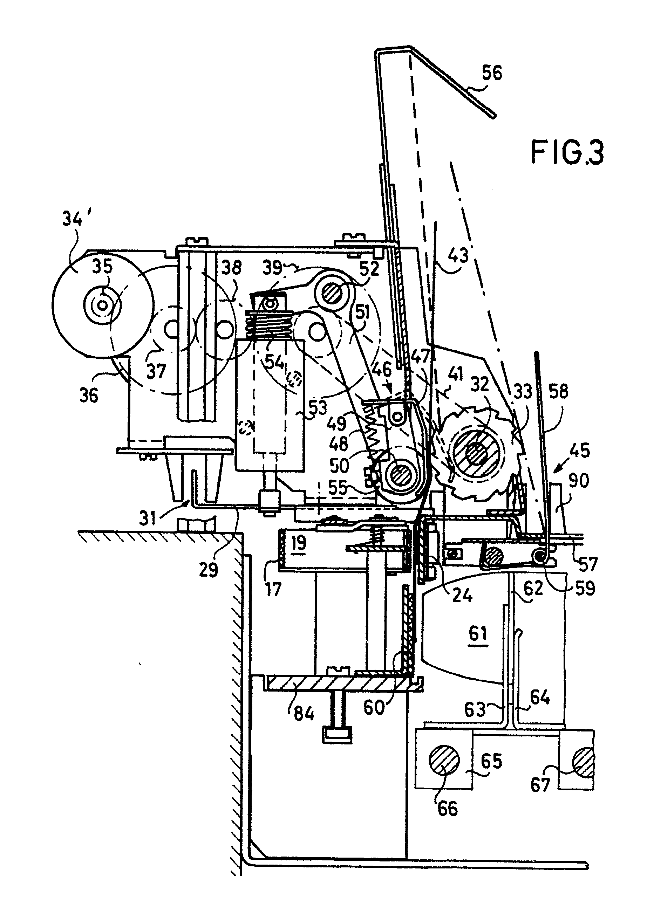

Wie FIG. 2 erkennen läßt, sind die zweiten Transportmittel 33 normalerweise nicht im Eingriff mit den Belegen 43. Dies wird bewirkt durch Andrückmittel 46, die Klinken 47 und Andrückrollen 55 umfassen, wobei die Klinken 47 von einer Feder 48 im Gegenuhrzeigersinn beeinflußt werden. Die Klinken 47 und Andrückrollen 55 sind mittels Haltern 49 auf einer gemeinsamen Welle 50 gelagert. Die Welle 50 ist zwischen zwei Stangen 51 gehalten. Die Stangen 51 sind auf einer Welle 52 angeordnet und können durch einen Elektromagneten 53 im Gegenuhrzeiger sinn aus der Stellung gemäß FIG. 2 in die Stellung gemäß FIG. 3 verschwenkt werden, wobei die Feder 54 gespannt wird.

In FIG. 2 sieht man die Andrückmittel 46 in der nicht erregten Lage des Elektromagneten 53, in der sie unwirksam sind, d.h. den Beleg 43 nicht berühren. Dies ist während des Transportes des Beleges 43 der Fall, weil die Andrückmittel den Transport des Beleges in Zeilenrichtung, also senkrecht zur Ebene der FIG. 2 und 3 nicht behindern dürfen. Werden jedoch die Andrückmittel 46, wie aus FIG. 3 ersichtlich, durch den Elektromagneten 53 verschwenkt, dann drücken die Andrückrollen 55 den Beleg 43 gegen die zweiten Transportmittel in Form der Reibrollen 33, die Klinken 47 liegen federnd an dem Beleg 43 an. Sobald der Beleg durch die Reibrollen 33 in den zweiten Transportmitteln so weit transportiert worden ist, daß die Unterkante des Beleges 43 im Zahngrund eines der Sägezähne der Reibrollen 33 anliegt, wird der Beleg weiter transportiert aus der Lage, die in FIG. 3 voll ausgezeichnet gezeigt ist, in die Lage, in der der Beleg 43 gestrichelt gezeigt ist. In dieser Lage treten die Klinken 47 zwischen die Reibrollen 33, in deren Ausschnitte 34 ein und verhindern ein Zurückfallen des Beleges 43 aus der gestrichelten Lage, so daß der Beleg weiter durch die Reibrollen 33 angetrieben wird, bis er an den oberen Anschlag 56 anschlägt, den Kulminationspunkt überschreitet und dann in die Sichtstation 45 herunterfällt, wo er in FIG. 3 in strichpunktierter Lage gezeigt ist. Die Sichtstation 45 wird definiert durch eine Anschlagplatte 57 und mit der Anschlagplatte verbundene Drahtbügel 58, die verstellbar auf kurzen Achsen 59 gelagert sind. Die Verstellbarkeit der Drahtbügel 58 hat den Zweck, daß die Bedienungsperson die Drahtbügel so einstellen kann, daß sie das Ablesen der Daten von dem Beleg 43 in der Sichtstation nicht behindern. Die Drahtbügel 58 ersetzen in vorteilhafter Weise die sonst vorgesehenen Glasscheiben oder dergleichen, die durch spiegelnde Effekte die Ablesung des Beleges behindern.

Der Anschlag 56 ist höhenverstellbar, um unterschiedliche Belegformate berücksichtigen zu können. Man sieht aus FIG. 2 und 3 auch, daß die Belegsichtstation nach oben offen ist, so daß jeder Beleg manuell entnommen werden kann.

Während des Transportes des Beleges 43 durch den Riemen 17 gleitet der Beleg auf einer Führungsschiene 84 entlang über eine elastische Reibungsunterlage 60. Auf der anderen Seite des Beleges 43 ist der Lesekopf 61 angeordnet, der mit einem Vorsprung 62 zwischen Halterungen 63 und 64 eines Schiebers 65 gehalten ist. Der Schieber 65 wird auf Achsen 66 und 67 in Zeilenrichtung des Beleges 43 transportiert. Die Transportmittel sind zur Verdeutlichung hier nicht speziell gezeigt. Es sei nur soviel erwähnt, daß der Lesekopf 61 durch die entsprechenden Antriebsmittel in zeilenrichtung hin und her bewegt werden kann, wobei die auf dem Beleg vorcodierten Angaben in der Lesestation 44 gelesen werden. Die Verschiebung des Lesekopfes 61 relativ zum Beleg 43 erfolgt dabei mit einer derartigen Geschwindigkeit, daß es grundsätzlich möglich ist, den Beleg 43 mehrfach zu lesen, während sich der vorhergehende Beleg in der Sichtstation 45 befindet. Außerdem ist der Lesekopf 61 zwischen den Führungen 63 und 64 höhenverstellbar, so daß Codierzeilen unterschiedlicher Lage gelesen werden können.

Zum Abtransport des Beleges aus der Sichtstation 44 dient eine Andrückrolle 70 (FIG. 1A und 1B), die mit einer Antriebsrolle 71 zusammenwirkt. Die Antriebsrolle 71 wird über einen Riemen 72 und Riemenräder 73 und 74 angetrieben. Das Riemenrad 74 und das Antriebsrad 71 sind auf einem Schwenkhebel 75 gelagert. der auf der Achse des Riemenrades 73 gelagert ist. Der Schwenkhebel wird durch einen Elektromagneten 76 so verschwenkt, daß die Antriebsrolle 71 in Eingriff mit der An drückrolle 70 kommt und den Beleg durch den Belegzuführschacht 77 zu den weiteren Antriebsrollen 78, 79 und 80 transportiert, die mit Andrückrollen 81, 82 und 83 zusammenwirken. Ein Sensor 90 meldet, ob sich noch oder schon ein Beleg in der Sichtstation 45 befindet. Im weiteren Verlauf des Belegransportes durchläuft der Beleg die Druckstationen.

Aus den Zeichnungen erkennt man ferner, daß die Vorratsstation 1, die Transportmittel 5, 22, 23, 17 für den Beleg 43 in die Lesestation 44; die zweiten Transportmittel für den Versatz des Beleges und die Sichtstation 45 als Vorbau bzw. Unterbau für den eigentlichen Codierdrucker ausgebildet sind, der aus der Eingabestation für die Belege - den Teilen 71 bis 83 und den sich anschließenden Druckstationen - besteht.

Die Lesestation 44 kann für optische Beleglesung und/oder auch für magnetische Beleglesung ausgebildet sein.

**Ansprüche**

1.  Belegcodiereinrichtung mit einer Lesevorrichtung (44) für das maschinelle Lesen vorcodierter Markierungen, mit einer Sichtstation (48) zum Anhalten des Beleges zum visuellen Lesen handschriftlicher Markierungen und einer oder mehreren anschließenden Druckstationen zum codierenden Bedrucken der Belege, wobei die Belege zwischen der Lese-, Sicht- und den Druckstationen durch erste Transportmittel 17 bis 19 bewegt werden,
    dadurch gekennzeichnet,
    daß durch zweiten Transportmittel (32 bis 42) ein Versatz der Belege quer zur Transportrichtung derart erfolgt, daß die Sichtstation (45) in Blickrichtung der Bedienungsperson vor der Lesestation (44) angeordnet ist.

2. Belegcodiereinrichtung nach Anspruch 1, dadurch gekennzeichnet, daß die Beleglesestation (44) nicht nur hinter der Belegsichtstation (45) sondern auch versetzt unterhalb derselben angeordnet ist, derart daß beim Versatz des Beleges (43) durch die zweiten Transportmittel (32 bis 42) nicht nur eine Verschiebung nach vorn sondern auch ein Anheben des Beleges auf eine zweite Ebene erfolgt, in der die Sichtstation (45) und die Druckstation angeordnet sind.

3. Belegcodiereinrichtung nach Anspruch 1, dadurch gekennzeichnet, daß die zweiten Transportmittel mit sägezahnförmigen Vorsprüngen versehene Reibrollen (33) umfassen, die zum Belegwechsel mit Andrückmitteln (46) in Eingriff gebracht und angetrieben werden.

4. Belegcodiereinrichtung nach Anspruch 3, dadurch gekennzeichnet, daß die Reibrollen (33) paarweise beidseits eines Ausschnittes (34) angeordnet sind und daß die Andrückmittel (46) Klinken (47) umfassen, die in die Ausschnitte (34) eintreten, wenn der Beleg entsprechend weit angehoben ist.

5. Belegcodiereinrichtung nach Anspruch 4, dadurch gekennzeichnet, daß die Andrückmittel (46) durch einen Elektromagneten (53) verschwenkbar sind aus einer unwirksamen Lage, in der der Belegtransport in Zeilenrichtung erfolgt, und einer wirksamen Lage, in der die Andrückmittel (46) an dem Beleg (43) bzw. an den Reibrollen (33) anliegen.

6. Belegcodiereinrichtung nach Anspruch 1, dadurch gekennzeichnet, daß ein Überschleudern und Abkippen des Beleges beim Antrieb durch die zweiten Transportmittel durch einen den Weg des Beleges (43) nach oben begrenzenden, höhenverstellbaren Anschlag (56) verhindert wird.

7. Belegcodiereinrichtung nach Anspruch 1, dadurch gekennzeichnet, daß die Sichtstation (45) für die Belege (43) nach vorn zum Blickfeld des Bedienenden hin durch Drahtbügel (58) begrenzt ist, die ein Ablesen der Daten nicht behindern.

8. Belegcodiereinrichtung nach Anspruch 7, dadurch gekennzeichnet, daß die Drahtbügel (58) seitenverstellbar sind.

9. Belegcodiereinrichtung nach Anspruch 1, dadurch gekennzeichnet, daß die Sichtstation (45) nach oben offen ist und ein Entnehmen des Beleges gestattet.

10. Belegcodiereinrichtung nach Anspruch 1 und 3, dadurch gekennzeichnet, daß eine Belegvorratsstation (1) mit Vereinzelungseinrichtung (22, 23), die ersten Transportmittel (5, 17) für den Transport des Beleges aus der Vorratsstation (1) in die Lesestation (44) und die Lesevorrichtung (61 bis 67) Bestandteil eines Moduls sind, das als Unterbau und Vorbau für das Codiermodul mit den verschiedenen Druckstationen angeordnet ist.

11. Belegcodiereinrichtung nach Anspruch 1 und 3, dadurch gekennzeichnet, daß die Lesevorrichtung (61 bis 67)in Zeilenrichtung beweglich in der Lesestation (44) angeordnet ist,und daß während des Lesens der Beleg (43) still steht.

12. Belegcodiereinrichtung nach Anspruch 11, dadurch gekennzeichnet, daß die Lesevorrichtung (61) höhenverstellbar in der Lesestation (44) angeordnet ist.

13. Belegcodiereinrichtung nach Anspruch 1 und 3, dadurch gekennzeichnet, daß die Lesevorrichtung (61 bis 67) wahlweise ein Lesekopf für Magnetschrift und/oder ein Lesekopf für optische Beleglesung sein kann.

**Claims**

1. Coding device having a read unit (44) for the reading by machine of pre-coded marks, having a viewing station (45) to stop the voucher for the visual reading of hand-written marks, and having one or more succeeding print stations for the coded printing of the vouchers, in which case the vouchers are moved by a first means of transport (17 to 19) between the read station, the viewing station and the print stations, characterized in that with a second transport means (32 to 42) the vouchers are offset obliquely to the direction of transport in such a way that the viewing station (45) is arranged in the line of vision of the operator in front of the read station (44).

2. Voucher coding device in accordance with claim 1,

characterized in that
the voucher read station (44) is not only arranged behind the voucher viewing station (45) but also arranged offset below the same, in such a way that when the voucher (43) is offset by the second transport means (32 to 42) there is not only a forward shift but also a lifting of the voucher to a second level at which the viewing station (45) and the print station are arranged.

3. Voucher coding device in accordance with claim 1,
characterized in that
the second transport means comprise saw tooth shaped projections on friction rollers (33) which are engaged and driven with pressure means (46) to change the voucher.

4. Voucher coding device in accordance with claim 3,
characterized in that
the friction rollers (33) are arranged in pairs on either side of a cutout (34) and that the pressure means (46) comprise ratchets (47) which enter the cutouts (34) when the voucher is raised correspondingly far enough.

5. Voucher coding device in accordance with claim 4,
characterized in that
the pressure means (46) can be swivelled by an electromagnet (53) from an inoperative position in which the voucher is transported in line direction, and from an operative position in which the pressure means (46) bear against the voucher (43) and/or the friotion rollers (33).

6. Voucher coding device in accordance with claim 1,
characterized in that
overshooting and tipping over of the voucher when driven through the second transport means is prevented by a height-adjustable stop (56) upwardly limiting the path of the voucher (43).

7. Voucher coding device in accordance with claim 1,
characterized in that
the viewing station (45) for the vouchers (43) is limited to the front in the viewing area of the operator by wiring links (58) which do not prevent the reading of the data.

8. Voucher coding device in accordance with claim 7,
characterized in that

the wiring links (58) are sideways adjustable.

9. Voucher coding device in accordance with claim 1,
characterized in that
the viewing station (45) is open to the top and allows the removal of the voucher.

10. Voucher coding device in accordance with claim 1 and 3,
characterized in that
a voucher supply station (1) with a single-feed device (22, 23), the first transport means (5, 17) for the transport of the voucher from the supply station (1) to the read station (44), and the read device (61 to 67) are components of a module which is arranged as a substructure and front-end part for the coding module with the various print stations.

11. Voucher coding device in accordance with claim 1 and 3,
characterized in that
the read unit (61 to 67) is movably arranged in line direction in the read station (44) and that during reading the voucher (43) does not move.

12. Voucher coding device in accordance with claim 11,
characterized in that
the read unit (61) is arranged height-adjustably in the read station (44).

13. Voucher coding device in accordance with claim 1 and 3,
characterized in that
the read unit (61 to 67) can optionally be a read head for magnetic text and/or a read head for optical voucher reading.

## Revendications

1. Dispositif de codage de documents avec un dispositif de lecture (44) pour la lecture mécanique de marquages précodés, avec une station d'examen visuel (45) pour l'immobilisation du document en vue de la lecture de marquages manuscrits et une ou plusieurs stations d'impression consécutives pour l'impression en code des documents, lesdits documents étant déplacés entre la station de lecture, la station d'examen visuel et les stations d'impression par de premiers moyens de transport (17 à 19),
caractérisé par le fait
que de seconds moyens de transport (32 à 42) opèrent un changement positionnel des documents transversalement au sens de transport, de telle sorte que la station d'examen visuel (45) soit disposée, dans la direction de visée, avant la station de lecture (44).

2.  Dispositif de codage de documents selon la revendication 1,
caractérisé par le fait
que la station de lecture de documents (44) n'est pas seulement disposée derrière la station d'examen visuel de document (45) mais aussi décalée, au-dessous de celle-ci, de telle sorte que, lors du changement positionnel du document (43) par les seconds moyens de transport (32 à 42), il se produit non seulement un décalage vers l'avant mais aussi une élévation du document sur un second plan dans lequel sont disposées la station d'examen visuel (45) et la station d'impression.

3.  Dispositif de codage de documents selon la revendication 1,
caractérisé par le fait
que les seconds moyens de transport comprennent des roulettes à friction (33) pourvues de saillies en forme de dents de scie qui, pour le changement de documents, sont mises en engrenage avec des moyens de pression (46) et entraînées.

4.  Dispositif de codage de documents selon la revendication 3,
caractérisé par le fait
que les roulettes à friction (33) sont disposées, par paires, de part et d'autre d'un évidement (34) et que les moyens de pression (46) comprennent des cliquets (47) qui pénètrent dans les évidements (34) si le document est suffisamment soulevé.

5.  Dispositif de codage de documents selon la revendication 4,
caractérisé par le fait
que les moyens de pression (46) peuvent être pivotés, par un électro-aimant (53), d'une position inefficace dans laquelle le transport des documents se fait dans le sens des lignes dans une position efficace dans laquelle les moyens de pression (46) appuient sur le document (43) ou sur les roulettes à friction (33).

6.  Dispositif de codage de documents selon la revendication 1,
caractérisé par le fait
qu'une élévation excessive et le basculement du document lors de l'entraînement par les seconds moyens de transport sont empêchés par une butée (56) réglable en hauteur, limitant le parcours du document (43) vers le haut.

7.  Dispositif de codage de documents selon la revendication 1,
caractérisé par le fait
que la station d'examen visuel (45) pour les documents (43) est limitée vers l'avant, vers le champ visuel de l'opérateur, par des étriers métalliques (58) qui n'empêchent pas la lecture de données.

8.  Dispositif de codage de documents selon la revendication 7,
caractérisé par le fait
que les étriers métalliques (58) sont réglables latéralement.

9.  Dispositif de codage de documents selon la revendication 1,
caractérisé par le fait
que la station d'examen visuel (45) est ouverte vers le haut et permet un prélèvement du document.

10.  Dispositif de codage de documents selon les revendications 1 et 3,
caractérisé par le fait
qu'une station débitrice de documents (1) avec un dispositif de séparation (22, 23), les premiers moyens de transport (5, 17) pour le transport du document de la station débitrice (1) à la station de lecture (44) et le dispositif de lecture (61 à 67) sont partie constituante d'un module qui est réalisé pour être placé sous ou devant le module de codage avec les différentes stations d'impression.

11.  Dispositif de codage de documents selon les revendications 1 et 3,
caractérisé par le fait
que le dispositif de lecture (61 à 67) est disposé mobile dans le sens des lignes dans la station de lecture (44) et que le document (43) est immobile pendant la lecture.

12.  Dispositif de codage de documents selon la revendication 11,
caractérisé par le fait
que le dispositif de lecture (61) est disposé de manière à pouvoir être réglé en hauteur dans la station de lecture (44).

13.  Dispositif de codage de documents selon la revendications 1 et 3,
caractérisé par le fait
que le dispositif de lecture (61 à 67) peut être, au choix, une tête de lecture pour écriture magnétique et/ou une tête de lecture pour la lecture optique de documents.

FIG.1A

FIG. 1B

FIG. 2

FIG.3

FIG. 4